# EUROPÄISCHE PATENTSCHRIFT

(11) **EP 3 982 024 B1**
(45) Veröffentlichungstag und Bekanntmachung des Hinweises auf die Patenterteilung: **10.05.2023**
(21) Anmeldenummer: 21206836.5
(22) Anmeldetag: 17.05.2018
(51) Int. Cl.: F16L 5/08, H02G 3/22

(54) **VORRICHTUNG ZUM ABDICHTEN UND/ODER ABSCHOTTEN EINER DURCHFÜHRUNG DURCH EINE WAND**
DEVICE FOR SEALING AND/OR THE PARTITION OF A PASSAGE WITH A WALL
DISPOSITIF D'ÉTANCHÉITÉ ET/OU DE CLOISONNEMENT D'UNE TRAVERSÉE À TRAVERS UNE PAROI

(30) Priorität: 17.05.2017 DE 202017102960 U
(43) Veröffentlichungstag der Anmeldung: 13.04.2022
(62) Teilanmeldung aus: 18172893.2
(73) Patentinhaber: DOYMA GmbH & Co, 28876 Oyten (DE)
(72) Erfinder: Chikatimalla, Rajesh, 500004 Hyderabad (IN)
(74) Vertreter: Eisenführ Speiser

(56) Entgegenhaltungen:
- EP-A1- 3 153 754
- DE-U1- 29 723 073

## Beschreibung

Die Erfindung bezieht sich auf eine Vorrichtung zum Abdichten und/oder Abschotten einer Leitungsdurchführung durch eine Öffnung in einem Wandbereich, mit zumindest einem um die Leitung herum anordenbaren Dichtungselement mit einer Innenfläche zum Anlegen an die Leitung und einer Außenfläche zum Inkontaktbringen mit einer die Öffnung begrenzenden Wandfläche, und einer Spanneinrichtung zum Verspannen des Dichtungselementes, sodass das Dichtungselement mit seiner Innenfläche abdichtend an der Leitung und mit seiner Außenfläche abdichtend an der Wandfläche anliegt, wobei die Spanneinrichtung zwei zu beiden Seiten des Dichtungselementes angeordnete, im Abstand zueinander veränderliche Spannkörper aufweist. Die Leitungsdurchführung umfasst eine oder mehrere Leitungen.

Vorrichtungen der vorgenannten Art, auch als Hauseinführungen oder Wanddurchführungen bekannt, werden in Gebäuden dazu verwendet, Leitungen, wie Medien- oder Versorgungsleitungen, gegen einen Durchbruch bzw. eine Öffnung in einer Wand des Gebäudes abzudichten. Solche Leitungen werden üblicherweise von außen in das Gebäude üblicherweise durch eine vertikale Gebäudewand oder durch eine horizontale Bodenplatte hindurchgeführt. Die Vorrichtung wird innerhalb des Durchbruches in Bodenplatte oder Gebäudewand eingesetzt und mit dem Abdichten der Vorrichtung gegenüber der den Durchbruch begrenzenden Wandfläche und der durch den Durchbruch hindurchgeführten Leitung, wird die Vorrichtung innerhalb des Durchbruches festgesetzt bzw. fixiert. Zudem wird mit dem Abdichten der Vorrichtung gegenüber der durch den Durchbruch geführten Leitung und gegenüber dem Durchbruch ein solcher Wanddurchbruch bzw. eine Öffnung in der Gebäudewand oder Bodenplatte für Umwelteinflüsse, wie Feuchtigkeit oder Schmutz, bevorzugt undurchlässig.

Die bekannten Vorrichtungen zum Abdichten und/oder Abschotten einer Durchführung weisen zumindest ein bereichsweise um die Leitung herum anordenbares Dichtungselement auf, das mit seiner Innenfläche an der durch die Öffnung im Wandbereich geführten Leitung anliegt oder während des Abdichtens in Anlage gebracht wird. Zudem weist das Dichtungselement eine Außenfläche auf, mit der das Dichtungselement mit einer die Öffnung begrenzenden Wandfläche in Kontakt gebracht wird. Die äußeren Abmessungen, insbesondere der Durchmesser, des Dichtungselementes können derart gewählt sein, dass das Dichtungselement bereits beim Einsetzen in die Öffnung vollumfänglich in Kontakt mit der Wandfläche steht.

Zudem umfasst die Vorrichtung eine Spanneinrichtung, mit der das Dichtungselement insbesondere parallel in Längsrichtung der abzudichtenden Leitung verspannt wird. Das Dichtungselement wird dabei insbesondere in axialer Richtung gestaucht und dehnt sich gleichzeitig in radialer Richtung aus. Durch die Ausdehnung in radialer Richtung wird die Innenfläche des Dichtungselementes auf die äußere Mantelfläche der Leitung gedrückt und die Außenfläche wird gegen die Wandung der Öffnung gepresst. Darüber ist eine Abdichtfunktion vom Dichtungselement in Richtung der Leitung und der Wandung im Durchbruch oder in der Öffnung bewirkt. Das Verspannen des Dichtungselementes erfolgt mittels zweier zu beiden Seiten des Dichtungselementes angeordneter Spannkörper, welche im Abstand zueinander veränderlich sind.

Aus EP 1 164 677 B1 ist eine Vorrichtung zum Abdichten und/oder Abschotten einer Durchführung mit mindestens einer durch eine Öffnung in einem Wandbereich geführten Leitung bekannt. Die Dichtpackung weist zu beiden Seiten des Dichtelementes angeordnete Spannkörper auf, wobei jeder Spannkörper aus mehreren separaten Ringsegmenten gebildet wird, welche über Spannschrauben zu beiden Seiten in Position zueinander gehalten werden.

Ferner offenbart die DE 297 23 073 U1 eine Dichtungsvorrichtung zum abdichtenden Durchführen mindestens einer Leitung durch einen in einer Wand oder dergleichen ausgebildeten Durchbruch, mit mindestens zwei in axialer Richtung der Leitung hintereinander angeordnete verformbare Dichtkörper mit einer Bohrung zur Aufnahme der Leitung und jeweils einer Trennfuge, die im montierten Zustand versetzt zueinander angeordnet sind, und einer Spanneinrichtung zum Verspannen des Dichtkörpers.

Das nacheinander zu erfolgende Montieren der einzelnen Ringsegmente der Spannkörper am Dichtelement ist relativ aufwendig. Zudem kann es durch die separate Ausgestaltung der Segmente bei einem ungleichmäßigen Verspannen zu einem axialen Versatz der Ringsegmente zueinander kommen, sodass das Dichtelement dann in die Kerbe oder Stufe hinein ausweicht. Das Ausweichen des Dichtelements kann in diesem Bereich zu einer unzureichenden Abdichtung gegenüber der Leitung oder der Wandfläche des Durchbruchs führen.

Der Erfindung liegt daher die Aufgabe zugrunde, eine Vorrichtung zum Abdichten und/oder Abschotten einer Durchführung mit mindestens einer durch eine Öffnung in einem Wandbereich geführten Leitung anzugeben, die sich möglichst einfach montieren lässt und zudem eine gleichmäßige Abdichtwirkung gewährleistet.

Die Lösung der Aufgabe erfolgt bei einer Vorrichtung der eingangs bezeichneten Art mit den Merkmalen von Anspruch 1. Insbesondere weist mindestens einer der Spannkörper mehrere zu einem Ringkörper zusammensetzbare Ringsegmente auf, wobei jedes Ringsegment jeweils endseitig über ein Verbindungsteil mit einem benachbarten Ringsegment reversibel koppelbar ist, wobei die mittels des Verbindungsteils koppelbaren Enden der Ringsegmente jeweils eine Steckaufnahme für das Verbindungsteil ausbilden.

Der Erfindung liegt die Erkenntnis zugrunde, dass über eine Steckaufnahme und ein in die Steckaufnahme einsetzbares Verbindungsteil die Ringsegmente zu einem einzigen Ringkörper zusammengesetzt werden können. Bevorzugt werden die Ringsegmente zu einem vollständig geschlossenen Ringkörper zusammengesetzt, der dann vereinfacht zu beiden Seiten des Dichtelementes montiert werden kann. Vorzugsweise werden die zu einem Ringkörper zusammensetzbaren und bevorzugt einen der Spannringe der Spanneinrichtung ausbildenden Ringsegmente über die Steckaufnahme zumindest in Umfangsrichtung zueinander fixiert. Während des Verspannens des Dichtelementes mit den Spannringen wird damit eine Relativbewegung der Ringsegmente in radialer wie auch in Umfangsrichtung zueinander vermieden. Bevorzugt sind die unmittelbar miteinander zu koppelnden Enden zweier Ringsegmente so ausgebildet bzw. derart zueinander angeordnet, dass nach dem Einsetzen des Verbindungsteils in die Steckaufnahme, eine Relativbewegung der Ringsegmente in axialer Richtung behindert wird. Beim Anziehen einer an einem Ringsegment angreifenden Spannschraube wird über die axiale Kopplung der Enden der Ringsegmente untereinander auf das benachbarte Ringsegment ebenfalls eine Spannkraft in Richtung des Dichtelementes aufgebracht. Dadurch wird eine verbesserte Verteilung der Spannkraft über den gesamten Umfang des mittels der zusammengesetzten Ringsegmente ausgebildeten Spannrings erreicht.

In einer bevorzugten Ausgestaltung der erfindungsgemäßen Vorrichtung weist die Steckaufnahme eine in im Wesentlichen radialer Richtung offene, insbesondere eine in Richtung des Außenumfangs des Spannkörpers offene Einsetzöffnung für das Verbindungsteil auf. Damit ist das Koppeln der Ringsegmente untereinander und mit dem Verbindungsteil weiter vereinfacht. Das Koppeln der Ringsegmente zu einem Ringkörper kann bei an den Umfang der Leitung angelegten Ringsegmenten erfolgen. Zudem wird die Relativbewegung der Ringsegmente in Umfangsrichtung des gebildeten Ringkörpers und in radialer Richtung wirksam behindert. Bevorzugt sind die unmittelbar miteinander zu koppelnden Enden zweier Ringsegmente so ausgebildet bzw. derart zueinander angeordnet und/oder das Verbindungsteil dazu eingerichtet, dass nach dem Einsetzen des Verbindungsteils in die Steckaufnahme, die Ringsegmente in axialer Richtung zueinander fixiert sind.

Bevorzugt ist der Spannkörper aus zwei, drei oder mehr zu einem Ringkörper zusammensetzbaren Ringsegmente ausgebildet. Bevorzugt wird in Abhängigkeit von der Größe der erfindungsgemäßen Vorrichtung die Anzahl der zur Ausbildung der Spannkörper miteinander zusammenzusetzenden Ringsegmente variiert. Je größer die Vorrichtung, desto mehr Ringsegmente werden zur Ausbildung des Spannkörpers verwendet, was die Handhabung bei der Montage, aufgrund der dadurch beschränkten Bauteilgröße, verbessert. In einer besonders bevorzugten Ausführungsform wird der Ringkörper, welcher auch als Spannring oder Spannkörper bezeichnet wird, aus drei oder vier zu einem Ringkörper zusammensetzbaren Ringsegmenten ausgebildet.

Vorzugsweise sind die Ringsegmente formidentisch, was die Herstellung der Spannkörper vereinfacht. Zur Ausbildung eines Spannkörpers einer vorbestimmten Größe wird vorzugsweise nur ein Werkzeug zur Ausbildung der den Ringkörper bzw. Spannring ausbildenden Ringsegmente benötigt. Bevorzugt weisen die zur Ausbildung des Spannringes verwendeten zwei, drei oder mehr Ringsegmente verschiedenförmig ausgebildete Enden oder Endabschitte auf. Damit kann eine Fehlmontage der zu einem Ringkörper zusammensetzbaren Ringsegmente vermindert bevorzugt vermieden werden. Vorzugsweise lassen sich nur unterschiedlich ausgebildete bzw. eine verschiedenartige Formgebung aufweisende Enden oder Endabschnitte der Ringsegmente miteinander koppeln.

Erst nach dem Koppeln der zueinander passenden Enden kann dann das Verbindungsteil in die mittels der zusammengesetzten Enden ausgebildete Steckaufnahme von außen über die Einsetzöffnung eingesetzt werden.

Gemäß der erfindungsgemäßen Vorrichtung umfasst jedes Ringsegment jeweils an beiden Enden ein zu seiner Außenseite hin geöffnetes Hakenteil zum Umgreifen des damit koppelbaren Verbindungsteils. Die Hakenteile sind bevorzugt an den Enden der Ringsegmente derart ausgebildet, dass das Verbindungsteil nur eingesetzt werden kann, wenn die Ringsegmente und die daran angeordneten Hakenteile eine vorbestimmte Ausrichtung zueinander einnehmen. Vorliegend sind die Seitenflächen der Ringsegmente in einer Ebene sowie die Außenflächen bzw. Innenflächen der Ringsegmente im Wesentlichen einen gleichmäßigen Radius ausbildend zueinander auszurichten. Durch das Einsetzen eines Verbindungselementes in eine Steckaufnahme erhalten vorzugsweise die zu einem Spannring oder Spannkörper zusammensetzbaren Ringsegmente eine feste Ausrichtung zueinander.

In einer alternativen Ausführungsform kann jedes Ende eines Ringsegmentes auch mehr als ein Hakenteil aufweisen. Mehrere Hakenteile an einem Ende des Ringsegmentes sind bevorzugt axial zueinander beabstandet, weisen ansonsten, bezogen auf eine parallel zur Achsrichtung des zu bildendenden Spannkörpers verlaufende Blickrichtung, eine identische Formgebung auf. Zwei Hakenteile an einem Ende eines Ringsegmentes verlaufen in achsparalleler Betrachtung im Wesentlichen deckungsgleich zueinander. Eine Weiterbildung der Erfindung sieht vor, dass die Hakenteile zweier jeweils endseitig miteinander koppelbarer Ringsegmente im Montagezustand einen Versatz in axialer Richtung zueinander aufweisen. Damit ist gewährleistet, dass die Ringsegmente insgesamt, insbesondere deren Seitenflächen, in einer Ebene zueinander verlaufen und vorzugsweise eine plane Anlagefläche zum Dichtelement ausbilden. Die zu einem Ringkörper bzw. Spannring zusammengesetzten Ringsegmente weisen untereinander somit keinen axialen Versatz auf, wodurch die insbesondere dem Dichtelement zugewandten Seitenflächen gleichmäßig in Anlage mit dem Dichtelement bringbar sind, also ohne einen Versatz zueinander. Dadurch ist die mittels des Spannkörpers auf das Dichtelement einwirkende Spannkraft weiter vergleichmäßigt. Darüber hinaus ist durch den Versatz der Hakenteile erreicht, dass die Ringsegmente sich nur in einer vorbestimmten Ausrichtung zueinander montieren lassen. Eine Fehlmontage kann dadurch bevorzugt ohne zusätzliche Hilfsmittel vermieden werden.

Gemäß einer Weiterbildung der erfindungsgemäßen Vorrichtung weist das Verbindungsteil ein in der Steckaufnahme anordenbares Verbindungselement auf, das vorzugsweise einen Querschnitt hat, der dazu eingerichtet ist, die miteinander zu koppelnden Ringsegmente verdrehsicher zueinander zu fixieren. Durch die verdrehsichere Kopplung der Enden der zu einem Spannring zusammensetzbaren Ringsegmente erhalten die Ringsegmente bevorzugt eine vorgegebene unveränderliche Ausrichtung zueinander, wodurch die Montierbarkeit des erfindungsgemäßen Spannkörpers verbessert ist. Vorzugsweise ist zwischen dem Verbindungselement und den mit dem Verbindungselement in Kontakt bringbaren Anlageflächen der Hakenteile an den Enden der Ringsegmente ein Formschluss bewirkt. Bevorzugt weist das Verbindungselement einen Querschnitt auf, der verhindert, dass die Ringsegmente relativ zueinander verdreht bzw. verschwenkt werden können. Bevorzugt ist der Querschnitt des Verbindungselements wenigstens in Teilbereichen unrund ausgebildet.

Vorzugsweise weist das Verbindungselement ein Querschnittsprofil auf, das ausgewählt ist aus der Gruppe bestehend aus oval, abgeflachter Kreis und vieleckig. Die mit dem Verbindungselement in Kontakt bringbare Anlagefläche der Hakenteile an den über ein Verbindungselement miteinander koppelbaren Enden zweier Ringsegmente weist bevorzugt eine zum Querschnittsprofil des Verbindungselements korrespondierende Ausgestaltung auf. Das Hakenteil und das Verbindungselement weisen bevorzugt spaltfrei miteinander in Kontakt bringbare Anlageflächen auf. In einer Ausgestaltung ist das Verbindungselement stabförmig ausgebildet und weist ein im Wesentlichen ovales Querschnittsprofil mit Abflachungen an voneinander abgewandten Flächenbereichen auf.

In einer Weiterbildung der erfindungsgemäßen Vorrichtung weist das Verbindungsteil mindestens einen in Umfangsrichtung abstehenden Vorsprung und die Ringsegmente eine mit dem Vorsprung korrespondierende Ausnehmung auf. Der Vorsprung, der bevorzugt als radial umlaufender Steg am Verbindungsteil ausgebildet ist, greift nach dem Koppeln mit den Ringsegmenten vorzugsweise formschlüssig in die Ausnehmungen an den Ringsegmenten ein und arretiert die Ringsegmente relativ zum Verbindungsteil und relativ zueinander in bevorzugt axialer Richtung.

Gemäß einer weiteren Ausgestaltung der Erfindung weist das Verbindungsteil an den Enden des Verbindungselementes angeordnete Anlageflansche für zwei in axialer Richtung zwischen den Anlageflanschen zu positionierende Hakenteile von miteinander koppelbaren Ringsegmente auf. Das Verbindungsteil mit seinen Anlageflanschen begrenzt die axiale Relativbewegung der Ringsegmente zueinander, wobei die Hakenteile der reversibel koppelbaren Enden der Ringsegmente bevorzugt spielfrei zwischen den Anlageflanschen des Verbindungsteiles aufgenommen sind. Die Hakenteile haben somit kein axiales Spiel in Längsrichtung des vorzugsweise stabförmig ausgebildeten Verbindungselementes, das die Verbindungflansche miteinander verbindet. Die Anlageflansche sind an den Enden des Verbindungselementes als kragenförmige Materialvorsprünge ausgebildet. In einer alternativen Ausführungsform sind die Anlageflansche als separate plattenförmige Abschlusskörper mit den Enden des bevorzugt stabförmigen Verbindungselementes verbunden.

Vorzugsweise weisen die Anlageflansche unterschiedliche mit benachbarten Bereichen der Ringsegmente korrespondierende Außenkonturen auf. Mit der unterschiedlichen Ausgestaltung der Anlageflansche eines jeweiligen Verbindungsteiles ist eine Fehlmontage des Verbindungsteiles, insbesondere beim Einstecken des Verbindungsteiles in eine jeweilige Steckaufnahme aus zwei miteinander korrespondierenden Endabschnitten der Ringsegmente vermieden. Vorzugsweise ist einer der Anlageflansche dazu eingerichtet, ausschließlich mit seiner den Hakenteilen zugewandten Anlagefläche in Kontakt mit einem Ende, insbesondere Hakenteil, eines der Ringsegmente gebracht zu werden. Der Anlageflansch am entgegengesetzten Ende des Verbindungsteils ist vorzugsweise mit der dem Hakenteil zugewandten Anlagefläche und mit Bereichen seiner Umfangsfläche in Anlage mit Flächenbereichen der zu beiden Seiten des Verbindungsteiles angeordneten Enden der Ringsegmente. Bevorzugt wird auch zwischen wenigstens einem der Anlageflansche des erfindungsgemäßen Verbindungsteiles und benachbarten Abschnitten der Ringsegmente ein Formschluss ausgebildet, worüber die Verdrehsicherung der reversibel miteinander koppelbaren Ringsegmente weiter verbessert wird.

In einer Ausführungsform der Erfindung schließt eines der Hakenteile an einem jeweiligen Ringsegment plan mit einer Seitenfläche des Ringsegmentes ab, und das andere Hakenteil hat einen Versatz zu beiden Seitenflächen des Ringsegmentes. Eine Anlagefläche eines der Anlageflansche des Verbindungsteiles verläuft bevorzugt in einer Ebene zu der durch die Ringsegmente gebildeten äußeren Seitenfläche des Spannringes. Der gegenüberliegend angeordnete Anlageflansch ist hingegen in einer Vertiefung zwischen zwei den zusammengesetzten Ringkörper ausbildenden Ringsegmenten aufgenommen. Im Zusammenhang mit den unterschiedlich ausgebildeten Anlageflanschen ist erreicht, dass das Verbindungsteil bei seiner Montage nur in einer vorbestimmten Ausrichtung in die Steckaufnahme der miteinander zu koppelnden Ringsegmente eingesetzt werden kann. Zudem ist durch die unterschiedliche Ausgestaltung der Hakenteile an den entgegengesetzten Enden eines jeweiligen Ringsegmentes erreicht, dass das Ringsegment selbst mit einem weiteren Ringsegment nur in einer vorgegebenen Ausrichtung zu einem ringförmigen Spannkörper zusammengesetzt werden kann.

In einer bevorzugten Ausgestaltung der erfindungsgemäßen Vorrichtung bilden zwei miteinander gekoppelte Ringsegmente im Verbindungsbereich eine plane Seitenfläche am Spannkörper aus, und an der entgegengesetzten Seitenfläche des Spannkörpers ist eine Ausnehmung zum Aufnehmen eines der Anlageflansche des Verbindungsteiles vorgesehen. Der Anlageflansch des Verbindungsteiles ist somit auf einer Seite des zu erzeugenden Spannringes eingerückt angeordnet. Vorzugsweise weist die Ausnehmung für einen Anlageflansch des Verbindungsteiles eine Tiefe auf, welche mindestens der Materialstärke des Anlageflansches entspricht. Bevorzugt weist die den Anlageflansch aufnehmende Ausnehmung eine Tiefe auf, die exakt der Materialstärke des Anlageflansches entspricht. Der Anlageflansch schließt somit vorzugsweise plan mit der Seitenfläche des gebildeten Spannkörpers ab und bildet eine dem Dichtelement zugewandte ebene Anlagefläche am Spannkörpers aus. Der Anlageflansch an der entgegengesetzten Seitenfläche des Spannkörpers liegt bevorzugt nach außen vorstehend auf der bevorzugt planen Seitenfläche auf.

Vorzugsweise bilden der in der Ausnehmung aufgenommene Anlageflansch und die angrenzenden Flächenbereiche der den Anlageflansch einfassenden Ringsegmente einen nahezu spaltfreien Kontaktbereich aus. Während des Verspannens des Dichtelementes wird dadurch bevorzugt eine Oberflächenrelaxation in den Spalt zwischen Anschlagflansch und benachbarte Ringsegmente hinein vermieden. Zudem wird eine gleichmäßige Flächenpressung zu beiden Seiten des zwischen den Spannkörpern aufgenommenen Dichtelementes gewährleistet. Die mittels der zu koppelnden Ringsegmente ausgebildete Ausnehmung an der einen Seitenfläche des Spannringes weist auf die Außenkontur des Anlageflansches angepasste Abmessungen auf. Insbesondere weist der Anlageflansch zwei parallel zueinander verlaufende Außenflächen und eine die Außenflächen umfangsseitig miteinander verbindende Bogenfläche auf. Aneinander angrenzende Flächen weisen untereinander einen bevorzugt gleichmäßigen Flächenübergang zueinander auf. Bevorzugt weist die bogenförmige Außenfläche einen Radius auf, welcher dem halben Abstand zwischen den parallel zueinander verlaufenden Außenflächen entspricht.

Gemäß einer Weiterbildung der erfindungsgemäßen Vorrichtung bilden miteinander in Kontakt bringbare Flächenbereiche von Verbindungsteil und mindestens eines der Ringsegmente in ihrer reversiblen Kopplungsstellung eine Rast- oder Schnappverbindung aus. Dadurch wird das in die Steckaufnahme eingeführte bzw. eingesetzte Verbindungselement gesichert bzw. arretiert, wodurch ein selbsttätiges Herausbewegen des Verbindungsteils aus der Steckaufnahme erschwert ist. In einer Ausführungsform der Erfindung weist jedes Hakenteil an seinem freien Ende eine Einschnürung auf, mit der das Öffnungsmaß der Steckaufnahme verringert wird, sodass das Verbindungselement, dessen Außenmaße bevorzugt größer sind als das Öffnungsmaß an der Einschnürung, an einem Herausbewegen gehindert wird.

In einer bevorzugten Ausgestaltung der Erfindung ist zur Ausbildung der Rast- oder Schnappverbindung an einem der Ringsegmente eine Materialausnehmung und am Verbindungsteil ein im gekoppelten Zustand in die Materialausnehmung eingreifender Materialvorsprung vorgesehen. Der Materialvorsprung ist in einer Ausführungsform ein in Längsrichtung des Verbindungselementes im Wesentlichen radial nach außen vorstehender Materialvorsprung. Dieser korrespondiert insbesondere mit einer Materialausnehmung an wenigstens einer, bevorzugt beiden Hakenteilen beider Ringsegmente. Alternativ oder optional ist an dem Anlageflansch, welcher innerhalb der Ausnehmung zwischen den miteinander koppelbaren Ringsegmenten aufnehmbar ist, insbesondere an einer oder beiden parallel zueinander verlaufenden Anlageflächen, ein Materialvorsprung ausgebildet. In einer anderen Ausgestaltung weisen die Ringsegmente in Richtung des Verbindungsteiles vorstehende Materialvorsprünge auf, und das Verbindungsteil weist damit entsprechend korrespondierende Materialausnehmungen bzw. Vertiefungen auf.

In einer Weiterbildung der vorliegenden Erfindung weist das Verbindungsteil an zumindest einer Stirnseite eine Betätigungsfläche mit vorzugsweise einer Griffmulde auf. Über die an der Betätigungsfläche vorhandene Griffmulde ist die Handhabung bzw. die Montage der Verbindungsteile mit den Ringsegmenten während des Zusammensetzens der Ringsegmente zu einem geschlossenen Spannkörper vereinfacht. Die Betätigungsfläche dient als unmittelbare Angriffsfläche für eine die Ringsegmente und die Verbindungsteile zu einem Ringkörper zusammensetzende Person. Die Griffmulde bildet zur Verbesserung der Haptik der Betätigungsfläche eine Vertiefung auf den Endflächen der Anlageflansche am Verbindungteil aus. Anstelle einer Griffmulde kann bevorzugt die Oberfläche an den Stirnflächen des Verbindungsteils aus einer die Griffsicherheit erhöhenden, weichelastische Eigenschaften aufweisenden Materialschicht ausgebildet sein. In einer weiteren Ausführungsform sind an den Stirnseiten des Verbindungsteils Erhebungen an den Betätigungsflächen ausgebildet.

Vorzugsweise ist das Verbindungsteil mittels einer Verliersicherung, vorzugsweise einem Band oder Draht, mit einem jeweiligen Ringsegment verbunden. Über die Verliersicherung ist das Verbindungsteil zwar relativ beweglich zu, aber dauerhaft mit einem Ringsegment gekoppelt. Vorzugsweise ist jedes den Spannkörper bzw. den Spannring ausbildende Ringsegment mit jeweils einem Verbindungsteil über eine entsprechende Verliersicherung gekoppelt. Als Verliersicherung kommen bevorzugt Ketten, Bänder oder Drähte zum Einsatz, welche vorzugsweise die Montage des Verbindungsteils mit den Ringsegmenten nicht einschränken. Solche Verliersicherungen sind zumindest über einen Verbindungspunkt mit einem Abschnitt eines jeweiligen Ringsegmentes und mit dem entgegengesetzten Ende mit dem Verbindungsteil, bevorzugt einem der Anschlagflansche des Verbindungsteiles, verbunden.

Gemäß einer Weiterbildung der erfindungsgemäßen Vorrichtung weist die vom Dichtungselement abgewandte Seitenfläche des Spannkörpers mehrere Materialvertiefungen als Aufnahmen für die mit dem Spannkörper zusammenwirkenden Spannelemente auf. Die Spannelemente, wie beispielsweise Spannbolzen, sind zumindest an einem Spannkörper der Vorrichtung so in die Seitenfläche des Spannkörpers eingelassen, dass die Spannelemente bevorzugt nicht an der Seitenfläche vorstehen. Insbesondere sind die als Werkzeugansatz ausgebildeten Endabschnitte, beispielsweise ein Sechskantkopf eines Spannbolzens, in den Spannkörper eingelassen. Bevorzugt weist der Spannkörper eine an die äußere Form des Endabschnittes angepasste Ausgestaltung auf, sodass die Endabschnitte der Spannelemente vorzugsweise formschlüssig und damit verdrehsicher an den Spannkörpern aufgenommen sind. Vorzugsweise ist bei der Montage der erfindungsgemäßen Vorrichtung es nicht notwendig, die Spannelemente separat bzw. zusätzlich zu fixieren bzw. arretieren. Das Verspannen der Spanneinrichtung erfolgt vorzugsweise über das Anziehen einer mit dem Spannbolzen verbundenen Spannmutter.

Die Erfindung wird im Folgenden anhand eines möglichen Ausführungsbeispiels unter Bezugnahme auf die beigefügten Figuren näher beschrieben. Hierbei zeigen:
- Fig. 1:: eine perspektivische Ansicht eines ersten Ausführungsbeispiels einer erfindungsgemäßen Vorrichtung;
- Fig. 2:: eine vergrößerte Darstellung der einen Verbindungsbereich zwischen zwei Ringsegmenten darstellenden Einrahmung I aus Fig. 1;
- Fig. 3:: eine vergrößerte Darstellung eines Verbindungsbereiches zwischen zwei Ringsegmenten ohne das die Ringsegmente miteinander verbindende Verbindungsteil;
- Fig. 4:: eine perspektivische Darstellung eines ersten Ausführungsbeispiels eines erfindungsgemäßen Verbindungsteiles;
- Fig. 5:: eine perspektivische Darstellung eines zweiten Ausführungsbeispiels einer erfindungsgemäßen Vorrichtung;
- Fig. 6:: eine vergrößerte Darstellung des durch die Einrahmung VI gekennzeichneten Verbindungsbereiches aus Fig. 5; und
- Fig. 7:: eine perspektivische Ansicht eines zweiten Ausführungsbeispiels eines erfindungsgemäßen Verbindungsteiles.

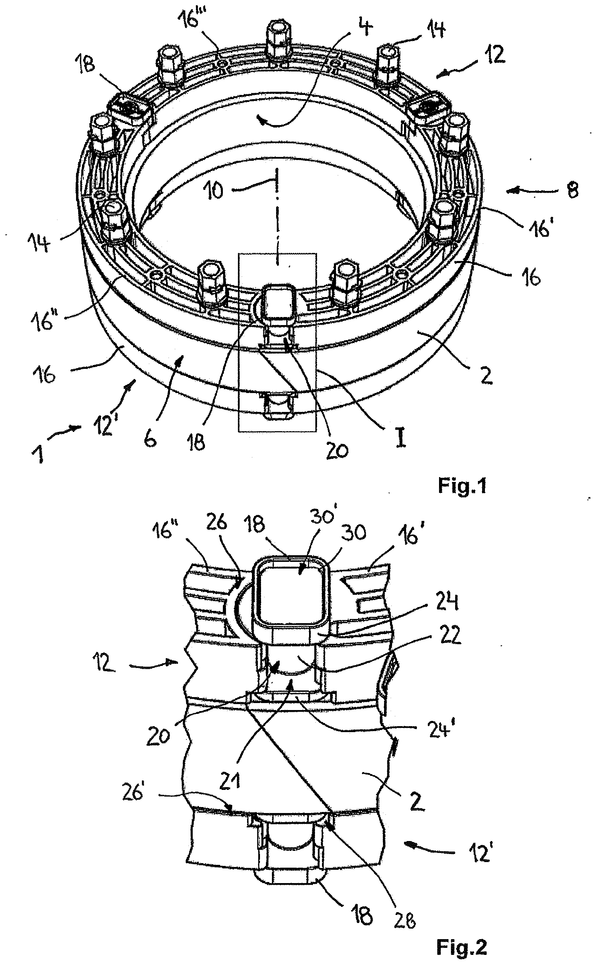

Fig. 1 zeigt eine erfindungsgemäße Vorrichtung 1 zum Abdichten und/oder Abschotten einer Durchführung mit mindestens einer durch einen Durchbruch in einem Wandbereich geführten Leitung, welche zumindest ein vollständig um die nicht näher dargestellte Leitung herum anordenbares Dichtungselement 2 aufweist. Das Dichtungselement 2 umfasst eine Innenfläche 4 zum Anlegen an die nicht gezeigte Leitung und eine Außenfläche 6 zum Inkontaktbringen mit einer ebenfalls nicht dargestellten, den Durchbruch in einem Wandbereich begrenzenden Wandung. Die Vorrichtung 1 umfasst ferner eine Spanneinrichtung 8 zum Verspannen des Dichtungselementes 2, wobei das Dichtungselement 2 mittels der Spanneinrichtung 8 in im Wesentlichen axialer Richtung parallel zur Mittenachse 10 gestaucht wird. Durch das axiale Stauchen dehnt sich das Dichtungselement 2 in im Wesentlichen radialer Richtung aus. Somit gelangt die Innenfläche 4 abdichtend mit dem äußeren Umfang der Leitung in Kontakt, und die Außenfläche 6 legt sich abdichtend an die Wandfläche an. Die Spanneinrichtung 8 weist zwei zu beiden Seiten des Dichtungselementes angeordnete Spannkörper 12, 12' auf, welche im Abstand zueinander veränderlich sind. Zur Abstandsänderung und zum Verspannen des Dichtungselementes 2 sind mehrere die Spannkörper 12, 12' miteinander verbindende Spannelemente 14 in Form von Spannbolzen vorgesehen.

Erfindungsgemäß weist der Spannkörper 12, 12', bevorzugt jeder der Spannkörper 12, 12' mehrere zu einem Ringkörper 16 zusammensetzbare Ringsegmente 16`, 16", 16‴ auf. Die Ringsegmente 16` bis 16‴ sind jeweils endseitig über ein Verbindungsteil 18 mit einem unmittelbar benachbarten Ringsegment verbunden, insbesondere reversibel koppelbar, also miteinander verbindbar und auch wieder voneinander trennbar. Die mittels des Verbindungsteiles 18 koppelbaren Enden der Ringsegmente 16` bis 16‴ bilden jeweils eine Steckaufnahme 20 für das darin einsetzbare Verbindungsteil 18 aus, die eine in Richtung des Außenumfangs des Spannkörpers 12, 12' offene Einsetzöffnung 21 für das Verbindungsteil 18 aufweist. In der gezeigten Ausführungsform setzt sich der Spannkörper 12, 12' aus drei zu einem Ringkörper 16 zusammensetzbaren Ringsegmenten 16`, 16", 16‴ zusammen. Gemäß anderen Ausführungsformen der Erfindung kann sich der Ringkörper in Abhängigkeit von der Größe der erfindungsgemäßen Vorrichtung aus auch nur zwei Ringsegmenten oder auch aus vier oder mehr als vier Ringsegmenten zusammensetzen.

In Fig. 2 ist die Einrahmung I aus Fig. 1 vergrößert dargestellt, wobei ersichtlich wird, dass das Verbindungsteil 18 ein mittels Einführen in die Einsetzöffnung 21 in der Steckaufnahme 20 anordenbares Verbindungselement 22 aufweist, das in einer Ausführungsform der Erfindung dazu eingerichtet ist, die miteinander zu verbindenden Ringsegmente 16` bis 16‴ verdrehsicher zueinander zu fixieren. An den einander gegenüberliegenden Enden des Verbindungselementes sind Anlageflansche 24, 24' vorgesehen, mit denen die Enden der Ringsegmente 16` bis 16‴ zwischen den Anlageflanschen in axialer Richtung relativ zueinander fixiert werden. Mit Hilfe des in der Steckaufnahme 20 aufgenommenen Verbindungselementes 22 werden die Ringsegmente 16, 16' des zu einem Ringkörper 16 bzw. Spannring zusammensetzbaren Spannkörpers vornehmlich in radialer Richtung etwa senkrecht zur Mittenachse 10 der Vorrichtung und in Umfangsrichtung um die Mittenachse 10 herum zueinander arretiert bzw. fixiert.

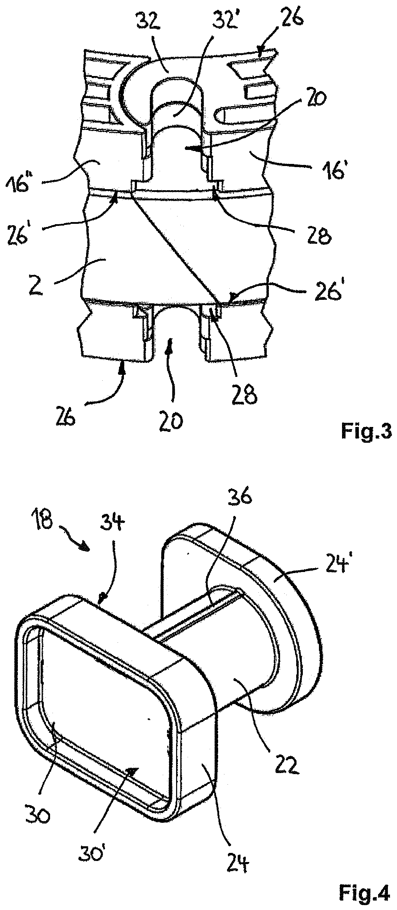

In einer Ausführungsform der Erfindung ist vorgesehen, dass mehrere miteinander koppelbare Ringsegmente 16` bis 16‴ im Verbindungsbereich eine plane Seitenfläche 26 ausbilden, siehe Fig. 2 und 3, und an einer entgegengesetzten Seitenfläche 26' des Spannkörpers eine Ausnehmung 28 (Fig. 3) zum Aufnehmen des Anlageflansches 24' des Verbindungsteiles 18 vorgesehen ist. Die Ausnehmung 28 ist insbesondere auf der Seitenfläche 26' des sich aus den Ringsegmenten 16` bis 16‴ zusammensetzenden Spannkörpers 12 ausgebildet, welcher die Anlagefläche zum Dichtungselementes 2 ausbildet. Der Anlageflansch 24 sitzt somit auf der planen Seitenfläche 26 des Spannkörpers 12, 12' vorstehend auf. Der andere Anlageflansch 24' ist hingegen innerhalb der Ausnehmung 28 aufgenommen. Der in der Ausnehmung 28 aufgenommene Anlageflansch 24' und die angrenzenden Flächenbereiche der Ringsegmente 16` bis 16‴ bilden einen nahezu spaltfreien Kontaktbereich zueinander aus. In einer weiteren Ausführungsform der Erfindung weist das Verbindungsteil 18 an zumindest einer Stirnseite 29, bevorzugt am Anlageflansch 24 des Verbindungsteils 18, eine von den Ringsegmenten 16` bis 16‴ abgewandte Betätigungsfläche 30 mit vorzugsweise einer Griffmulde 30` auf.

Fig. 3 zeigt eine vergrößerte Ansicht zweier mit ihren Enden zusammengesetzten Ringsegmente 16`, 16" ohne das die Ringsegmente koppelnde Verbindungsteil 18. Die Enden der Ringsegmente 16, 16' bilden die Steckaufnahme 20 mit ihrer Einsetzöffnung 21 für das nicht darin angeordnete Verbindungsteil 18 aus. Jedes Ringsegment weist jeweils an beiden Enden ein zur Außenseite geöffnetes Hakenteil 32, 32' auf welches das nicht abgebildete Verbindungsteil 18, insbesondere dessen Verbindungselement 22, bereichsweise umgreift. Wie Fig. 3 verdeutlicht, weisen die miteinander korrespondierenden Hakenteile 32, 32' der Ringsegmente 16` und 16" einen Versatz in axialer Richtung zueinander auf. Das Hakenteil 32 schließt an dem Ringsegment 16` plan mit einer der Seitenflächen 26 des Spannkörpers 12 ab. Das andere Hakenteil 32`, das am zum Hakenteil 32 entgegengesetzten Ende des Ringsegmentes angeordnet ist, weist einen Versatz zu beiden Seitenflächen 26, 26' der jeweiligen Ringsegmente 16` bis 16‴ auf. Die eingesetzten Ringsegmente sind alle zueinander formidentisch.

Fig. 4 zeigt eine perspektivische Ansicht eines in einer Steckaufnahme 20 einsetzbaren Verbindungsteiles 18, welches als zentrale Verbindungskomponente ein stab- oder bolzenförmiges Verbindungselement 22 aufweist. Das Verbindungselement 22 hat in einer Ausführungsform der Erfindung einen Querschnitt, der dazu eingerichtet ist, dass die Ringsegmente zueinander verdrehsicher fixiert sind. Der Querschnitt ist in einer Ausführungsform der Erfindung ausgewählt aus der Gruppe bestehend aus oval, unrund, abgeflachter Kreis und vieleckig. Wie Fig. 4 weiterhin verdeutlicht, weisen die an den Enden des Verbindungselementes 22 angeordneten Anlageflansche 24, 24` unterschiedliche Außenkonturen auf, wodurch eine Fehlmontage des Verbindungsteiles vermieden ist. Insbesondere ist der Anlageflansch 24 dazu ausgebildet, an der Seitenfläche des Spannkörpers 12, 12' hervorzustehen. Dieser liegt ausschließlich mit seiner den Hakenteilen 32, 32' zugewandten Anlagefläche 34 an der Seitenfläche des Spannkörpers 12 an. Der Anlageflansch 24' ist hingegen in der mittels der Ringsegmente 16` bis 16‴ ausgebildeten Ausnehmung 28 (Fig. 3) aufgenommen, wobei dessen Außenfläche bevorzugt plan zu der Seitenfläche 26` des zu einem Ringkörper 16 ausgebildeten Spannkörpers 12 ausgerichtet ist. Zwischen den Anlageflanschen 24, 24' werden die Hakenteile 32, 32' der miteinander koppelbaren Ringsegmente 16 bis 16‴ zueinander fixiert bzw. arretiert.

Wie Fig. 4 ferner verdeutlicht, ist am Verbindungselement 22 des Verbindungsteiles ein in Längsrichtung des Verbindungselementes 22 verlaufender Materialvorsprung 36 für eine Rast- oder Schnappverbindung vorgesehen, der in eine nicht näher dargestellte korrespondierende Materialausnehmung in der aus den Hakenteilen 32, 32' ausgebildeten Steckaufnahme 20 eingreift. Damit ist zwischen dem Verbindungsteil und zumindest einem der Ringsegmente in ihrer reversiblen Kupplungsstellung eine wirkende Rast- oder Schnappverbindung ausgebildet, mit der ein selbsttätiges Lösen des Verbindungsteiles 18 aus der Steckaufnahme 20 im Verbindungsbereich der Enden der Ringsegmente 16` bis 16‴ heraus erschwert wird.

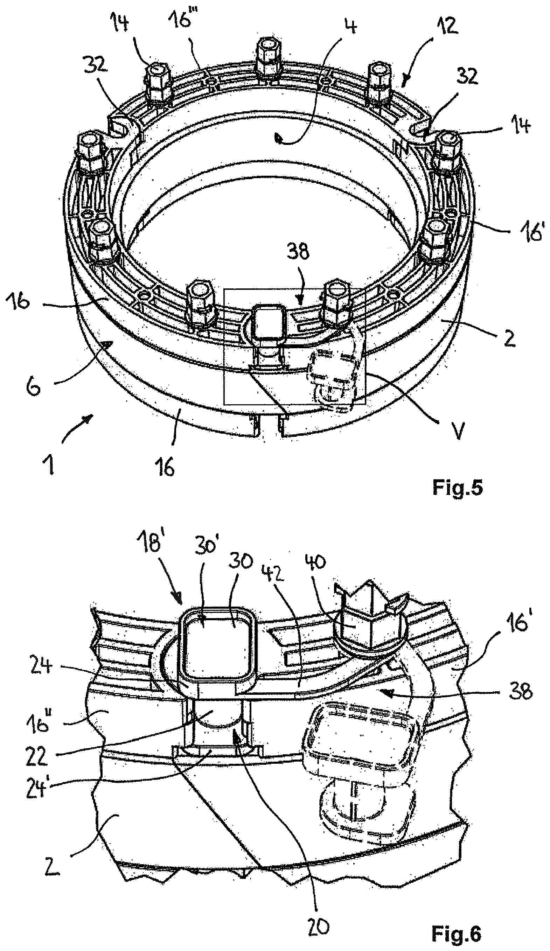

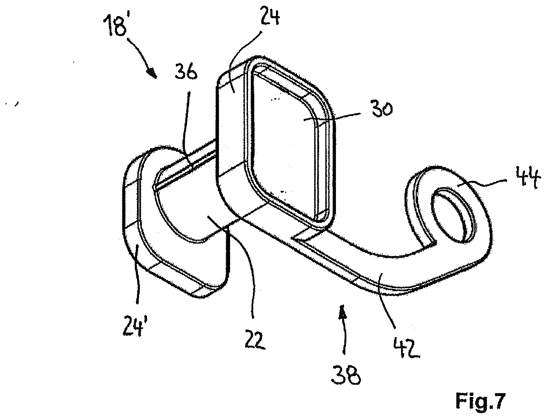

In den nachfolgenden Fig. 5 bis 7 ist eine zweite Ausführungsform der erfindungsgemäßen Vorrichtung 1 gezeigt, welche im Vergleich zur Vorrichtung gemäß den Fig. 1 bis 4 grundsätzlich einen identischen Aufbau hat, jedoch ein Verbindungsteil 18' umfasst, das mittels einer Verliersicherung 38 mit einem Ringsegment 16` bis 16‴ gekoppelt ist. In der gezeigten Ausführungsform ist die Verliersicherung 38 mit einem Spannelement 14 der Spanneinrichtung 8 unterhalb einer Spannmutter 40 festgelegt. In einer weiteren Ausführungsform dient die Verliersicherung 38 gleichzeitig als Montagehilfe, die das Einführen bzw. Einsetzen des Verbindungsteiles 18' in die mittels der Enden zweier reversibel miteinander koppelbarer Ringsegmente 16`, 16" ausgebildete Steckaufnahme 20 vereinfacht. Insbesondere ist die Verliersicherung 38 als Schwenkarm 42 eine vorgegebene Ausrichtung des Verbindungsteiles 18' zur Einsetzöffnung 21 der Steckaufnahme 20 erreicht. Der Schwenkarm 42 ist mit einem Ende mit dem Anlageflansch 24 verbunden. Am entgegengesetzten Ende weist der Schwenkarm 42 eine Öse 44 auf, durch die eines der Spannelemente 14 geführt ist. Am Verbindungselement 22 ist wiederum ein Materialvorsprung 36 für eine Rast- oder Schnappverbindung mit der Steckaufnahme 20 ausgebildet. Wie ferner aus Fig. 5 durch das Weglassen der in einem jeweiligen Verbindungsbereich von zwei Ringsegmenten 16` bis 16‴ reversibel zu montierenden Verbindungssteile 18, 18' verdeutlich, sind die Ringsegmente 16` bis 16‴ formidentisch ausgebildet. Gleiche oder ähnliche Bauteile sind mit denselben Bezugszahlen bezeichnet.

### Bezugszeichenliste:

- 1: Vorrichtung
- 2: Dichtungselement
- 4: Innenfläche
- 6: Außenfläche
- 8: Spanneinrichtung
- 10: Mittenachse
- 12, 12`: Spannkörper
- 14: Spannelement
- 16: Ringkörper
- 16' bis 16‴: Ringsegment
- 18, 18': Verbindungsteil
- 20: Steckaufnahme
- 21: Einsetzöffnung
- 22: Verbindungselement
- 24, 24': Anlageflansch
- 26, 26': Seitenfläche
- 28: Ausnehmung
- 29: Stirnseite
- 30: Betätigungsfläche
- 30': Griffmulde
- 32, 32': Hakenteil
- 34: Anlagefläche
- 36: Materialvorsprung
- 38: Verliersicherung
- 40: Spannmutter
- 42: Schwenkarm
- 44: Öse

## Patentansprüche

1. Vorrichtung zum Abdichten einer Leitungsdurchführung durch eine Öffnung in einem Wandbereich, mit zumindest einem um die Leitung herum anordenbaren Dichtungselement (2) mit einer Innenfläche (4) zum Anlegen an die Leitung und einer Außenfläche (6) zum Inkontaktbringen mit einer die Öffnung begrenzenden Wandung, und einer Spanneinrichtung (8) zum Verspannen des Dichtungselements (2), so dass das Dichtungselement mit seiner Innenfläche (4) abdichtend an der Leitung und mit seiner Außenfläche (6) abdichtend an der Wandung anliegt, wobei die Spanneinrichtung (8) zwei zu beiden Seiten des Dichtungselements (2) angeordnete, im Abstand zueinander veränderliche Spannkörper (12, 12`) aufweist,
wobei mindestens einer der Spannkörper (12, 12`) mehrere zu einem Ringkörper (16) zusammensetzbare Ringsegmente (16', 16", 16‴) aufweist, wobei jedes Ringsegment jeweils endseitig über ein Verbindungsteil (18, 18`) mit einem benachbarten Ringsegment (16`, 16", 16‴) reversibel koppelbar ist, wobei die beiden mittels des Verbindungsteils (18, 18`) koppelbaren Enden der Ringsegmente (16', 16", 16‴) jeweils eine Steckaufnahme (20) für das Verbindungsteil (18,18`) ausbilden,
**dadurch gekennzeichnet, dass** jedes Ringsegment (16', 16", 16‴) jeweils an beiden Enden ein die Steckaufnahme bildendes und zu seiner Außenseite geöffnetes Hakenteil (32, 32`) zum bereichsweisen Umgreifen des damit koppelbaren Verbindungsteils (18,18`) umfasst.

2. Vorrichtung nach Anspruch 1, **dadurch gekennzeichnet, dass** die Ringsegmente (16', 16", 16‴) formidentisch sind.

3. Vorrichtung nach Anspruch 1 oder 2,
**dadurch gekennzeichnet, dass** die Hakenteile (32, 32`) zweier jeweils endseitig miteinander koppelbarer Ringsegmente (16', 16", 16‴) im Montagezustand einen Versatz in axialer Richtung zueinander aufweisen.

4. Vorrichtung nach einem der vorstehenden Ansprüche,
**dadurch gekennzeichnet, dass** das Verbindungsteil (18, 18`) ein in der Steckaufnahme (20) anordenbares Verbindungselement (22) aufweist, das vorzugsweise dazu eingerichtet ist, die miteinander zu koppelnden Ringsegmente (16', 16", 16‴) verdrehsicher zueinander zu fixieren.

5. Vorrichtung nach einem der vorstehenden Ansprüche,
**dadurch gekennzeichnet, dass** das Verbindungsteil (18, 18`) mindestens einen in Umfangsrichtung abstehenden Vorsprung und die Ringsegmente (16', 16", 16‴) eine mit dem Vorsprung korrespondierende Ausnehmung aufweist.

6. Vorrichtung nach Anspruch 4 oder 5,
**dadurch gekennzeichnet, dass** das Verbindungsteil (18, 18`) an den Enden des Verbindungselements (22) angeordnete Anlageflansche (24, 24`) für mindestens zwei in axialer Richtung zwischen den Anlageflanschen zu positionierende Hakenteile (32, 32`) von miteinander koppelbaren Ringsegmente (16', 16", 16‴) aufweist.

7. Vorrichtung nach Anspruch 6,
**dadurch gekennzeichnet, dass** die Anlageflansche (24, 24`) unterschiedliche mit benachbarten Bereichen der Ringsegmente (16', 16", 16‴) korrespondierende Außenkonturen aufweisen.

8. Vorrichtung nach einem der vorstehenden Ansprüche,
**dadurch gekennzeichnet, dass** eines der Hakenteile (32, 32`) an einem jeweiligen Ringsegment (16', 16", 16‴) plan mit einer Seitenfläche (26) des Ringsegmentes abschließt und das andere Hakenteil (32, 32`) einen Versatz zu beiden Seitenflächen (26`) des Ringsegmentes hat.

9. Vorrichtung nach einem der vorstehenden Ansprüche,
**dadurch gekennzeichnet, dass** zwei miteinander gekoppelte Ringsegmente (16', 16", 16‴) im Verbindungsbereich eine plane Seitenfläche (26) am Spannkörper (12, 12`) ausbilden und an der entgegengesetzten Seitenfläche (26`) des Spannkörpers (12, 12') eine Ausnehmung (28) zum Aufnehmen eines der Anlageflansche (24, 24`) des Verbindungsteiles (18, 18`) vorgesehen ist.

10. Vorrichtung nach Anspruch 9,
**dadurch gekennzeichnet, dass** der in der Ausnehmung (28) aufgenommene Anlageflansch (24) und die angrenzenden Flächenbereiche der Ringsegmente (16', 16", 16‴) einen nahezu spaltfreien Kontaktbereich ausbilden.

11. Vorrichtung nach einem der vorstehenden Ansprüche,
**dadurch gekennzeichnet, dass** miteinander in Kontakt bringbare Flächenbereiche von Verbindungsteil (18, 18`) und mindestens eines der Ringsegmente (16', 16", 16‴) in ihrer reversiblen Kopplungsstellung eine Rast-oder Schnappverbindung ausbilden.

12. Vorrichtung nach Anspruch 11,
**dadurch gekennzeichnet, dass** zur Ausbildung der Rast- oder Schnappverbindung an einem der Ringsegmente (16', 16", 16‴) eine Materialausnehmung und am Verbindungsteil ein im gekoppelten Zustand in die Materialausnehmung eingreifender Materialvorsprung (36) vorgesehen ist.

13. Vorrichtung nach einem der vorstehenden Ansprüche, **dadurch gekennzeichnet, dass** das Verbindungsteil (18, 18`) an zumindest einer Stirnseite (29) eine Betätigungsfläche (30) mit vorzugsweise einer Griffmulde (30') aufweist.

14. Vorrichtung nach einem der vorstehenden Ansprüche, **dadurch gekennzeichnet**, das Verbindungsteil (18`) mittels einer Verliersicherung (38), vorzugswiese Band, Draht oder Schwenkarm (42), mit einem jeweiligen Ringsegment (16', 16", 16‴) verbunden ist.

## Claims

1. Device for sealing a line feed-through through an opening in a wall region, having at least one sealing element (2) which can be arranged around the line and which has an inner face (4) for placing on the line and an outer face (6) for bringing into con-tact with a wall which delimits the opening, and having a tensioning device (8) for tensioning the sealing element (2) so that the sealing element abuts with the inner face (4) thereof in a sealing manner against the line and abuts with the outer face (6) thereof in a sealing manner against the wall, wherein the tensioning device (8) has two tensioning members (12, 12') which are arranged at both sides of the sealing el-ement (2) and which are variable with respect to each other in terms of spacing,
wherein at least one of the tensioning members (12, 12') has a plurality of annular segments (16', 16", 16‴) which can be assembled to form an annular member (16), wherein each annular segment can be reversibly coupled in each case at the end side via a connection portion (18, 18') to an adjacent annular segment (16', 16", 16‴), wherein the two ends of the annular segments (16', 16", 16‴) which can be coupled by means of the connection portion (18, 18') in each case form a plug type receiving member (20) for the connection portion (18, 18'),
**characterised in that** each annular segment (16', 16", 16‴) comprises in each case at both ends a hook portion (32, 32'), which forms the plug type receiving member and is open towards the outer side thereof, for partially engaging around the connection portion (18, 18') which can be coupled thereto.

2. Device according to claim 1, **characterised in that** the annular segments (16', 16", 16‴) are identical in terms of shape.

3. Device according to claim 1 or 2,
**characterised in that** the hook portions (32, 32') of two annular segments (16', 16", 16‴) which can be coupled in each case to each other at the end side have an off-set with respect to each other in an axial direction in the assembly state.

4. Device according to any one of the preceding claims,
**characterised in that** the connection portion (18, 18') has a connection element (22) which can be arranged in the plug type receiving member (20) and which is prefera-bly configured to fix to each other in a torsion-resistant manner the annular seg-ments (16', 16", 16‴) which are intended to be coupled to each other.

5. Device according to any one of the preceding claims,
**characterised in that** the connection portion (18, 18') has at least one projection which protrudes in a peripheral direction and the annular segments (16', 16", 16‴) have a recess which corresponds to the projection.

6. Device according to claim 4 or 5,
**characterized in that** the connection portion (18, 18') has abutment flanges (24, 24') which are arranged on the ends of the connection element (22) for at least two hook portions (32, 32') of annular segments (16', 16", 16‴) which can be coupled to each other, which hook portions (32, 32') are intended to be positioned in an axial direc-tion between the abutment flanges.

7. Device according to claim 6,
**characterised in that** the abutment flanges (24, 24') have different outer contours which correspond to adjacent regions of the annular segments (16', 16", 16‴).

8. Device according to any one of the preceding claims,
**characterised in that** one of the hook portions (32, 32') terminates at a respective annular segment (16', 16", 16‴) in a planar manner with a side face (26) of the annu-lar segment and the other hook portion (32, 32') has an offset with respect to both side faces (26') of the annular segment.

9. Device according to any one of the preceding claims,
**characterised in that** two annular segments (16', 16", 16‴) which are coupled to each other in the connection region form a planar side face (26) on the tensioning mem-ber (12, 12') and, at the opposite side face (26') of the tensioning member (12, 12'), a recess (28) for receiving one of the abutment flanges (24, 24') of the connection portion (18, 18') is provided.

10. Device according to claim 9,
**characterised in that** the abutment flange (24) which is received in the recess (28) and the adjacent surface regions of the annular segments (16', 16", 16‴) form an almost gap-free contact region.

11. Device according to any one of the preceding claims,
**characterised in that** surface regions, which can be brought into contact with each other, of the connection portion (18, 18') and at least one of the annular segments (16', 16", 16‴) form in their reversible coupling position a locking or snap-fitting connection.

12. Device according to claim 11,
**characterised in that**, in order to form the locking or snap-fitting connection, a material recess is provided on one of the annular segments (16', 16", 16‴) and a material projection (36) which engages in the coupled state in the material recess is provided on the connection portion.

13. Device according to any one of the preceding claims, **characterised in that** the connection portion (18, 18') has at least at one end side (29) an activation face (30) with preferably one gripping recess (30').

14. Device according to any one of the preceding claims, **characterised in that** the connection portion (18') is connected by means of a loss prevention device (38), preferably a strip, wire or pivot arm (42), to a respective annular segment (16', 16", 16‴).

## Revendications

1. Dispositif d'étanchéité d'un passage de câble par une ouverture dans une zone de paroi, avec au moins un élément d'étanchéité (2) pouvant être agencé autour du câble avec une surface intérieure (4) pour le placement contre le câble et une surface extérieure (6) pour la mise en contact avec une paroi limitant l'ouverture, et un dispositif de serrage (8) pour le serrage de l'élément d'étanchéité (2) de sorte que l'élément d'étanchéité repose avec sa surface intérieure (4) de manière étanche contre le câble et avec sa surface extérieure (6) de manière étanche contre la paroi, dans lequel le dispositif de serrage (8) présente deux corps de serrage (12, 12') agencés des deux côtés de l'élément d'étanchéité (2), modifiables à distance l'un de l'autre,
dans lequel au moins un des corps de serrage (12, 12') présente plusieurs segments annulaires (16', 16", 16‴) pouvant être assemblés en un corps annulaire (16), dans lequel chaque segment annulaire peut être couplé de manière réversible respectivement côté extrémité par le biais d'une partie de liaison (18, 18') à un segment annulaire (16', 16", 16‴) contigu, dans lequel les deux extrémités pouvant être couplées au moyen de la partie de liaison (18, 18') des segments annulaires (16', 16'', 16''') réalisent respectivement un logement à enficher (20) pour la partie de liaison (18, 18'),
**caractérisé en ce que** chaque segment annulaire (16', 16", 16‴) comporte respectivement aux deux extrémités une partie de crochet (32, 32') formant le logement à enficher et ouverte vers son côté extérieur pour entourer par endroits la partie de liaison (18, 18') pouvant être couplée à celle-ci.

2. Dispositif selon la revendication 1, **caractérisé en ce que** les segments annulaires (16', 16'', 16''') sont identiques en forme.

3. Dispositif selon la revendication 1 ou 2,
**caractérisé en ce que** les parties de crochet (32, 32') de deux segments annulaires (16', 16", 16‴) pouvant être couplés entre eux respectivement côté extrémité présentent dans l'état de montage un déport dans le sens axial l'une de l'autre.

4. Dispositif selon l'une quelconque des revendications précédentes,
**caractérisé en ce que** la partie de liaison (18, 18') présente un élément de liaison (22) pouvant être agencé dans le logement à enficher (20) qui est de préférence conçu afin de fixer sans pouvoir tourner l'un à l'autre les segments annulaires (16', 16", 16‴) à coupler entre eux.

5. Dispositif selon l'une quelconque des revendications précédentes,
**caractérisé en ce que** la partie de liaison (18, 18') présente au moins une saillie dépassant dans le sens périphérique et les segments annulaires (16', 16", 16‴) présentent un évidement correspondant à la saillie.

6. Dispositif selon la revendication 4 ou 5,
**caractérisé en ce que** la partie de liaison (18, 18') présente des brides d'appui (24, 24') agencées aux extrémités de l'élément de liaison (22) pour au moins deux parties de crochet (32, 32') à positionner dans le sens axial entre les brides d'appui de segments annulaires (16', 16", 16''') pouvant être couplés entre eux.

7. Dispositif selon la revendication 6,
**caractérisé en ce que** les brides d'appui (24, 24') présentent différents contours extérieurs correspondant aux zones contiguës des segments annulaires (16', 16", 16‴).

8. Dispositif selon l'une quelconque des revendications précédentes,
**caractérisé en ce qu'**une des parties de crochet (32, 32') se termine au niveau d'un segment annulaire (16', 16", 16‴) respectif de manière plane avec une surface latérale (26) du segment annulaire et l'autre partie de crochet (32, 32') présente un déport vers les deux surfaces latérales (26') du segment annulaire.

9. Dispositif selon l'une quelconque des revendications précédentes,
**caractérisé en ce que** deux segments annulaires (16', 16, 16‴) couplés entre eux réalisent dans la zone de liaison une surface latérale (26) plane au niveau du corps de serrage (12, 12') et au niveau de la surface latérale (26') opposée du corps de serrage (12, 12'), un évidement (28) est prévu pour la réception d'une des brides d'appui (24, 24') de la partie de liaison (18, 18').

10. Dispositif selon la revendication 9,
**caractérisé en ce que** la bride d'appui (24) reçue dans l'évidement (28) et les zones de surface contiguës des segments annulaires (16', 16'', 16''') réalisent une zone de contact presque sans fente.

11. Dispositif selon l'une quelconque des revendications précédentes,
**caractérisé en ce que** des zones de surface pouvant être amenées en contact les unes avec les autres de la partie de liaison (18, 18') et au moins un des segments annulaires (16', 16", 16‴) dans leur position de couplage réversible réalisent une liaison d'encliquetage ou d'enclenchement.

12. Dispositif selon la revendication 11,
**caractérisé en ce que** pour la réalisation de la liaison d'encliquetage ou d'enclenchement, un évidement de matériau est prévu au niveau d'un des segments annulaires (16', 16'', 16''') et une saillie de matériau (36) venant en prise dans l'état couplé dans l'évidement de matériau est prévue au niveau de la partie de liaison.

13. Dispositif selon l'une quelconque des revendications précédentes, **caractérisé en ce que** la partie de liaison (18, 18') présente au niveau d'au moins un côté avant (29) une surface d'actionnement (30) avec de préférence une cavité de préhension (30').

14. Dispositif selon l'une quelconque des revendications précédentes, **caractérisé en ce que** la partie de liaison (18') est reliée au moyen d'une protection contre la perte (38), de préférence une bande, un fil ou un bras de pivotement (42), à un segment annulaire (16', 16", 16‴) respectif.
